# EUROPEAN PATENT APPLICATION

(11) **EP 1 351 012 A1**
(43) Date of publication of application: **08.10.2003**
(21) Application number: 02400023.4
(22) Date of filing: 02.04.2002
(51) Int. Cl.: F16M 11/28, F21V 21/22, F16B 7/14

(54) **Supporting frame for work light**

(71) Applicant: Alliance Technology Group, Inc., Taipei (TW)
(72) Inventor: Chuang, Feng-Chi, Taipei (TW)
(74) Representative: UEXKÜLL & STOLBERG

(57) **Abstract**

A supporting frame (20) for work light, with work lights (22) installed thereon, comprising a set of extension rods (231,232,233), with a fixating mechanism (24) to secure the state of extension; supporting legs that are pivotally jointed to the extension rods, so as to keep the supporting frame (20) for work light on the ground; wherein the fixating mechanism (24) is of a ring-shaped structure with notches and a movable rod (244) is included to be installed at the junction of the extension rods; the movable rod (244) is to be operated with single action, so as to control the state of tightness or looseness of the fixating mechanism (24), and further enabling the fixating mechanism (24) to secure or release the state of extension of the extension rods (231,232,233).

## Description

### BACKGROUND OF THE INVENTION

### FIELD OF THE INVENTION

The invention relates to a fixating mechanism for supporting frame for work light, more particularly, a fixating mechanism of the supporting frame for working light that, used for supporting frame for work light adjustable regarding heights, secures the height of the supporting frame through a single movable rod to control the state of tightness and looseness.

### DESCRIPTION OF THE RELATED ART

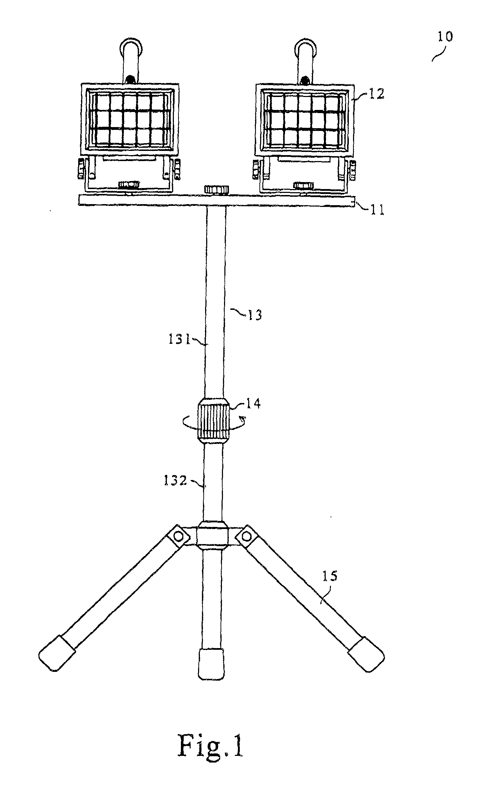

The use of work lights is prevalent for people working at night. In accordance with the need of working environment, the conventional work light is installed on supporting frame for work light, as shown in Fig. 1. The supporting frame for work light 10 comprises a crossbar 11, used for installing work light 12; an extending rod 13, with the state of extension being fixated by a fixating mechanism 14; and supporting frame 15, pivotally jointed on the extension rod 13 to support the extension rod 13, and keep the supporting frame for work light standing on the ground; wherein, according to the prior art, the extension rod 13 includes the upper rod 131 and the lower rod 132, with the diameter of one rod slightly larger than the other, thus enabling one rod with larger diameter to sheathe the other and the height of the supporting frame can be adjusted. The fixating mechanism 14, composed of screw nut and screw thread base, is installed on the junction of the upper rod 131 and the lower rod 132; the fixating mechanism 14 utilizes the screw nut to tighten the screw thread base, thus fixating the state of extension of the upper rod 131 and the lower rod 132, and further securing the height of the supporting frame of work light.

Since the height of the supporting frame for work light needs to be adjusted frequently during use, the means of adjusting the extension rod 13 involves the convenience of the operation for the supporting frame for work light. The fixating mechanism 14 of the prior art is composed of screw nut and screw thread base, when being operated on, requires more rotating motions for the user to loosen the screw nut, so as to adjust the extension position of the upper and lower rods. Because the degree of tightening and loosening between the upper and lower rods is to be depended on that of the rotation of the screw nut, it is only for the user to release the tightened state of the screw thread base that the user can adjust the state of extension of the upper and lower rods with energy-saving and time-saving ways

### SUMMARY OF THE INVENTION

The primary object of the invention is to provide a fixaling mechanism, used for supporting frame for work light adjustable regarding heights, that secures the height of the supporting frame through a single movable rod to control the state of tightness and looseness, which includes an extension rod, with the state of extension being fixated by the fixating mechanism; and supporting frame, pivotally jointed onto the extension rod, so as to support the extension rod and thus enabling the supporting frame for work light to stand on the ground; wherein the fixating mechanism is of a notched structure, with the two ends of such notch being pierced by a screw; one end of such screw is pivotally jointed to a movable rod, with the movable rod activating the tightness of the two ends of the ring structure.

The secondary object of the invention is to provide a fixating mechanism, used for supporting frame for work light adjustable regarding heights, that secures the height of the supporting frame through a single movable rod to control the state of tightness and looseness, comprising a set of extension rods, a fixating mechanism and a supporting frame; the supporting frame is to be pivotally jointed to the extension rod, which is to be secured by the fixating mechanism to fixate the state of extension; the fixating mechanism, installed at the junction of the extension rod, includes a notched main body and a movable rod; the movable rod can be operated through single action to control the state of tightness or looseness of the fixating mechanism, and further enables the fixating mechanism to secure or release the state of extension of the extension rod.

The extension rod includes a first rod and a second rod, and the junction between the first and second rod is installed with the fixating mechanism to control the state of extension of the two rods.

The main body contains round holes having the same axis but different inner diameters; such round holes include a first piercing hole and a second piercing hole, with a protruding portion extended respectively from the first and second piercing holes.

The first piercing hole is used for being pierced by an extension rod.

The second piercing hole is used for being pierced by another extension rod.

The notched groove of the main body is formed by the two protruding portions of the first piercing hole and the second piercing hole.

The second piercing hole is to extend upwards to be installed with a concave ring, and on one side of the concave ring a plurality of protruding ribs are formed.

### BRIEF DESCRIPTION OF THE DRAWINGS

These and other features, aspects and advantages of the present invention will become better understood with regard to the following description, appended claims and accompanying drawings that are provided only for further elaboration without limiting or restricting the present invention, where:
Fig. 1 shows a front view of the supporting frame for work light of the prior art;
Fig. 2 shows a front view of the supporting frame for work light of the invention;
Fig. 3 shows a sectional view of the fixating mechanism during state of release of the invention;
Fig. 4 shows a sectional view of the fixating mechanism during state of tightness of the invention;
Fig. 5 shows a front view of the supporting frame for work light of the invention;
Fig. 6 shows a top plan view of the fixating mechanism of the supporting frame for work light of the invention;
Fig. 7 shows a sectional view from the X-X line in Fig. 6;
Fig. 8 shows a side view of the supporting frame for work light of the invention;
Fig. 9 shows a sectional view from the Y-Y line in Fig. 8;
Fig. 10 shows a sectional view of the fixating mechanism coordinating with the extension rod from the X-X line in Fig. 6;
Fig. 11 shows a sectional view of the fixating mechanism coordinating with the extension rod having state of tightness from the Y-Y line in Fig. 8;
Fig. 12 shows a sectional view of the fixating mechanism coordinating with the extension rod having state of looseness from the Y-Y line in Fig. 8; and
Fig. 13 shows another embodiment of the invention, displaying a sectional view of the fixating mechanism coordinating with the extension rod from the X-X line in Fig. 6.

### DETAILED DESCRIPTION OF THE PREFERRED EMBODIMENT

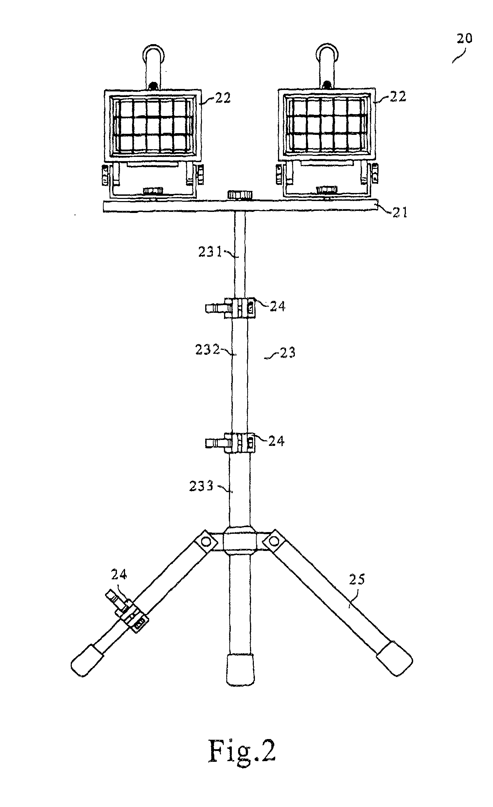

The first embodiment of the invention is shown in Fig. 2 to Fig. 4, wherein Fig. 2 shows the front view of the supporting frame for work light of the invention. The supporting frame for work light 20 of the invention comprises a crossbar 21, with the work light 22 installed thereon; an extension rod 23 that is jointed to the crossbar 21 and the state of extension of the extension rod 23 is to be fixated by the fixating mechanism 24, thus the height of the supporting frame for work light 20 is to be secured; the supporting frame 25, pivotally jointed onto the extension rod 23 to support the extension rod 23 and keep the supporting frame for work light 20 standing on the ground; wherein the fixating mechanism includes a movable rod, and the user can operate such movable rod with single action so as to control the tightness or looseness of the fixating mechanism, and thus tightening or loosening the state of extension of the extension rod 23, without having the situation regarding the prior art that the user needs to conduct multiple rotating motions to loosen the tightening state by degree or tighten the loosening state.

In the preferred embodiment of the invention, the extension rod 23 of the supporting frame for work light 20 is composed of a first rod 231 and a second rod 232, wherein the first rod 231 is jointed to the crossbar 21, as shown in Fig. 2; e.g., the crossbar 21 can be fixated on one end of the first rod 231 with a screw, and a set of supporting frame 25 is pivotally jointed onto the second rod 232, just as in Fig. 2 that the supporting frame 25 is pivotally jointed onto the rod 233, thus keeping the extension rod 23 standing on the ground; the fixating mechanism 24 is to be installed on the junction of the first rod 231 and the second rod 232 to secure the state of extension of the extension rod 23.

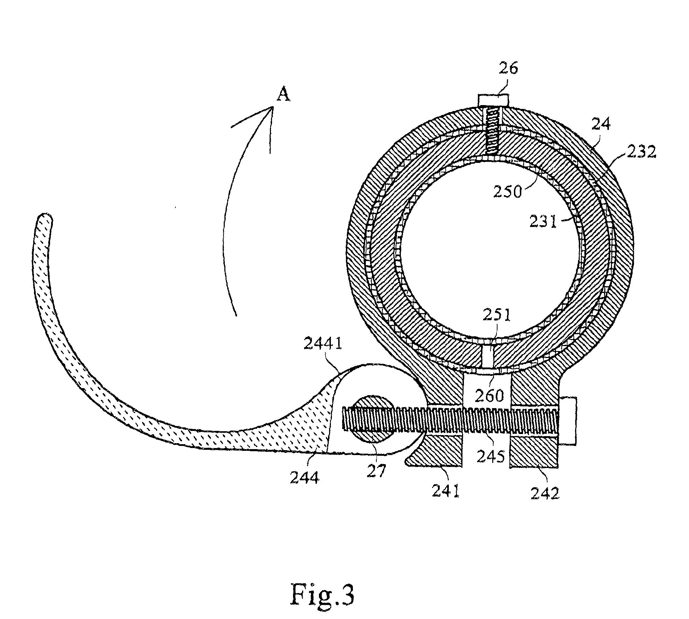

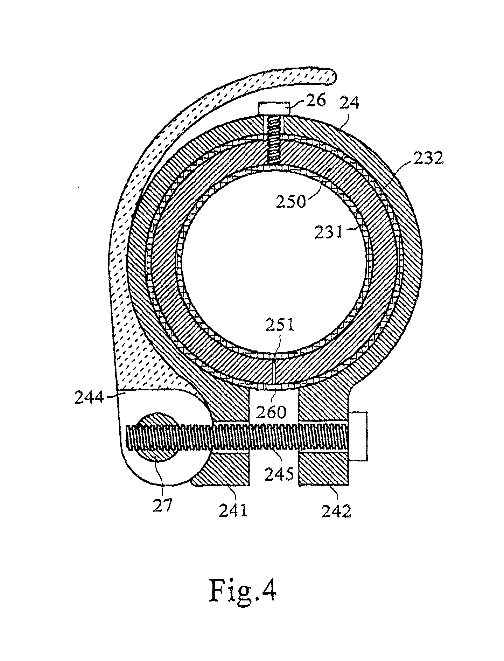

Please refer to Fig. 3 and Fig. 4, which show the sectional views of the state of tightening and loosening of the fixating mechanism 24. In the preferred embodiment of the invention, the fixating mechanism 24 is of a ring -shaped structure with notch and can be installed at the end portion of either the first rod 231 or the second rod 232, with the end portions having concave groove 260, and a ring-shaped plastic tube 250 having slit 251 is jointed in the interior of the second rod 232, and a screw member 26 can be used for securing the plastic tube 250 and the fixating mechanism 24 on both the inner and outer edge of the end portion of the second rod 232, so that the tightness of the fixating mechanism 24 can tighten and constrict the inner diameter of the plastic tube 250, so as to secure the first rod 231 to achieve the locking purpose. As shown in Fig. 3 and Fig. 4, when the fixating mechanism 24 is installed at the junction of the first rod 231 and the second rod 232, the inside-out installing structure of the fixating mechanism 24, the first rod 231 and the second rod 232 in order is: the first rod 231, the plastic tube 250, the second 232 and the fixating mechanism 24. Furthermore, two end portions 241 and 242 are formed at the notched portion of the fixating mechanism 24, with a screw 245 pierced through; it is clear from Fig. 3 that one end of such screw 245 is to pierce through the two end portions 241 and 242 of the ring-shaped structure and then joint to the pivot rod 27 of the movable 244, so as to adjust the screw 245 to joint with the movable rod 244 and the fixating mechanism 24. The movable rod 244 contains the cam structure 2441, thus the movable rod 244 can be operated, with the pivot rod 27 as pivot, to rotate in direction A, and the cam structure 2441 is to cause the end portion 241 to be close to the end portion 242, thus constricting the second rod 242 and the plastic tube 250, and achieving the securing effect of the first rod 231. To further elaborate, the screw 245 can also be replaced by non-screw members (without screw threads), and there is no screw involved between the two end portions 241 and 242, thus when the movable rod 244 activates the end portion 241, the end portion 241 can easily be caused to be close to the other end portion 242.

In another preferred embodiment of the invention, since the application of the use of the fixating mechanism 24 on the supporting frame for work light can achieve more convenience, the extension rod 23 of the supporting frame 20 for work light can be composed of the first rod 231, the second rod 232 and the third rod 233, wherein the junction of the first rod 231 and the second rod 232 and the junction of the second rod 232 and the third rod 233 are respectively installed with the fixating mechanism 24 to control the state of extension, as shown in Fig. 2, thus making the supporting frame 20 for work light of the invention more flexible and applicable than the prior art with two extension rods concerning the height adjustment. Further, the supporting leg 25 of the supporting frame 20 for work light can be formed as two extension rods and installed with the fixating mechanism 24 thereon, so that when the supporting frame 20 for work light of the invention is used for standing on the ground, the supporting leg 25 can be used conveniently for adjusting uneven grounds. For example, the fixating mechanism can also be composed of two separate ring-shaped fixers, one end for both fixers are to be fixated onto the rod with another end for both fixers being operated by single movable rod with single action, so as to control the state of tightness and looseness of the two fixers.

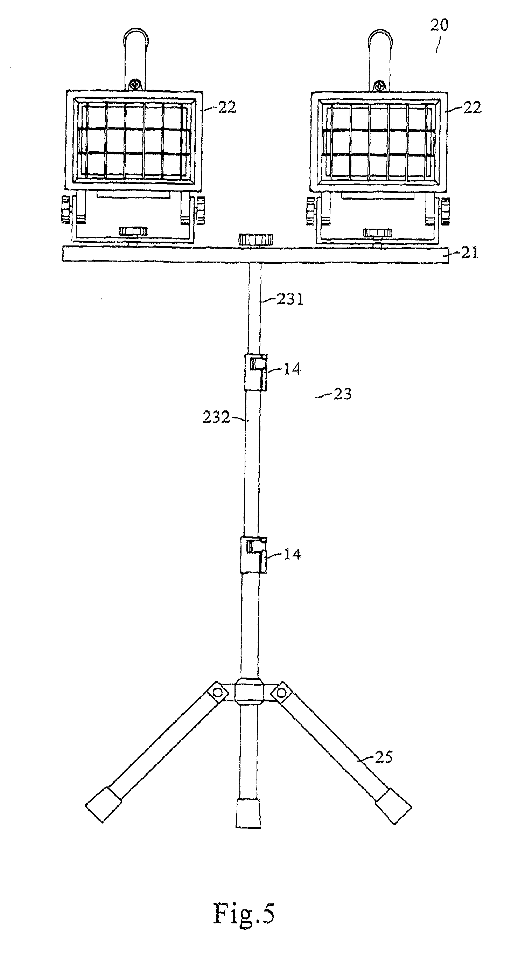

Fig. 5 to Fig. 12 show the second embodiment of the invention. Please refer to Fig. 5 first, which shows a front view of the supporting frame for work light of the invention. The supporting frame 20 for work light of the invention comprises a crossbar 21, whereon work lights 22 are installed; a set of extension rods 23, jointing with the crossbar 21, that is fastened by the fixating mechanism 14 to secure the state of extension, thus fixating the height of the supporting frame 20 for work light; a supporting leg 25, pivotally jointed onto the extension rods 23, so as to support the extension rods 23 and keep the supporting frame 20 for work light standing on the ground. The fixating mechanism 14 includes a movable rod 17, thus enabling the user to use single action to operate the movable rod 17 to control the state of tightness or looseness of the fixating mechanism 14, with which the state of extension of the extension rods 23 can be secured or released.

In the preferred embodiment of the invention, the extension rods 23 of the supporting frame 20 for work light includes a first rod 231 and a second rod 232, wherein the first rod 231 is to be jointed to the crossbar 21, as shown in Fig. 5; for example, a screw can be used for locking the crossbar 21 on one end of the first rod 231, whereas a set of supporting frame 25 can be pivotally jointed to the second rod 232, thus the extension rods 23 can be kept standing on the ground. The fixating mechanism 14 is then installed on the junction of the first rod 231 and the second rod 232 to secure the state of extension of the extension rods 23.

The fixating mechanism 14 embodied in the invention comprises a main body 16 and a movable rod 17, wherein the main body 16 includes round holes 160 having the same axis but different inner diameters, such round holes 160 can be divided into a first piercing hole 161 and a second piercing hole 162 for the extension rods 23 to pierce through, and two protruding portions 141 and 142 are respectively extended from the first piercing hole 161 and the second piercing hole 162, with a notched groove 18, used for jointing the movable rod 17, being formed by the two protruding portions 141 and 142; axial holes are included respectively by the protruding portions 141 and 142 to coordinate with the axial hole of the movable rod 17 having the cam structure 171, so as to be pivotally jointed together to form the fixating mechanism 14 of the supporting frame 20 for work light.

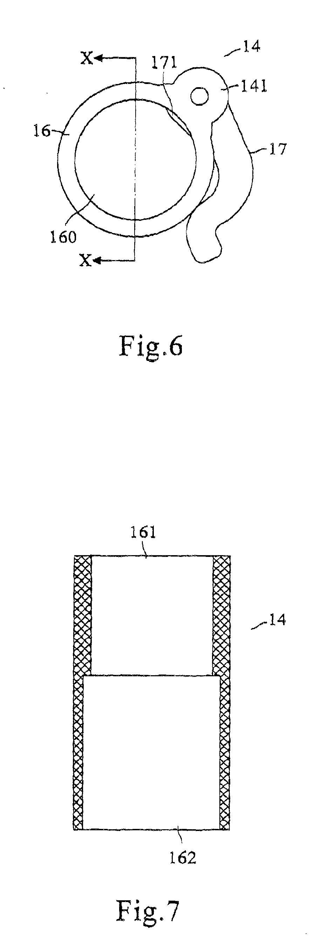

Please refer to Fig. 6 to Fig. 9, which show the fixating mechanism 14 of the embodiment of the invention. In the preferred embodiment of the invention, the round holes 160 of the main body 16 can be divided into a first piercing hole 161 and a second piercing hole 162, wherein the first piercing hole 161 is used for being pierced by the first rod 231, and the second piercing hole 162 is used for being pierced by the second rod 232; in addition, with the working of the movable rod 17 that contains the notched groove 18 formed by the protruding portion 141 of the first piercing hole 161 and the protruding portion 142 of the second piercing hole 162, the cam structure 171 installed in the movable rod 17 is able to control the state of looseness or tightness of the fixating mechanism 14, thus further enabling the fixating mechanism 14 to secure or release the extension state of the first rod 231. It is to be shown in Fig. 6 to Fig. 9 that, when the movable rod 17 is under state of drawing back, the movable rod 17 is to tightly lean on the outer side of the main body 16, thus causing the cam structure 171 of the notched groove 18 to protrude a bit portion into the first piercing hole 161, and then such bit protrusion of the cam structure 171 exactly props against the first rod 231 inside the first piercing hole 161, thus the extension state of the first rod 231 can be secured or released.

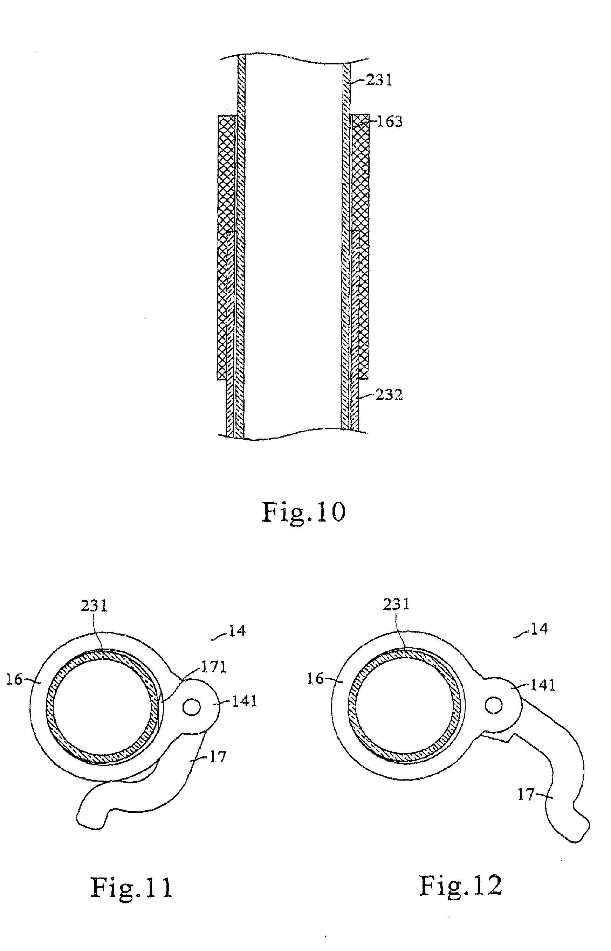

Please refer to Fig. 10, which shows a sectional view of the fixating mechanism coordinating with the extension rod from the X-X line in Fig. 6, wherein the second rod 232 is to tightly lean against the inside of the second piercing hole 162, and prop against the junction of the first piercing hole 161 and the second piercing hole 162, whereas the first rod 231 is placed in the first piercing hole 161 and pierces through the second rod 232; a slit 163, formed between the first rod 231 and the first piercing hole 161, enables the first rod 231 to be extended to adjust the height of the supporting frame 20 for work light. Thus when fixating the first rod 231 and the second rod 232, the cam structure 171, via the working of the movable rod 17, is to force the first rod 231 to lean toward the inner side of the main body 16 and the second rod 232 until it is totally fixated, further fixating the first rod 231 and the second rod 232.

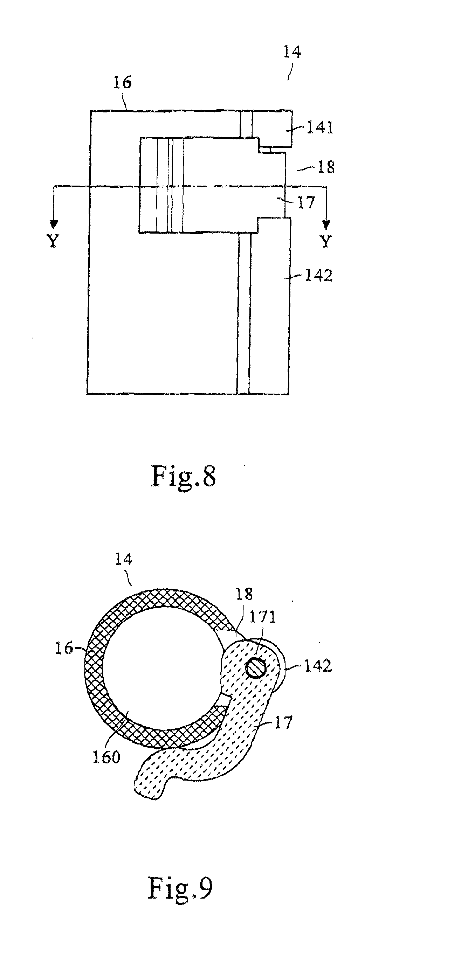

Please refer to Fig. 11, which shows a sectional view of the fixating mechanism coordinating with the extension rod having state of tightness from the Y-Y line in Fig. 8; at this time the movable rod 17 is under state of drawing back, wherein the first rod 231 located in the first piercing hole 161, for accepting the working of the moving rod 17, causes the protruding portion of the cam structure 171 to press the slit 163 between the first rod 231 and the first piercing hole 161, and thus causes the first rod 231 to tightly lean against one side of the first piercing hole 161 by the pressing of the cam structure 171.

Please refer to Fig. 12, which shows a sectional view of the fixating mechanism coordinating with the extension rod having state of looseness from the Y-Y line in Fig. 8; at this time the movable rod 17 is under state of release; since the movable rod 17 is released, the cam structure 171 of the movable rod 17 is to be placed in the notched groove 18 formed by the protruding portion 141 of the first piercing hole 161 and the protruding portion 142 of the second piercing hole 162.

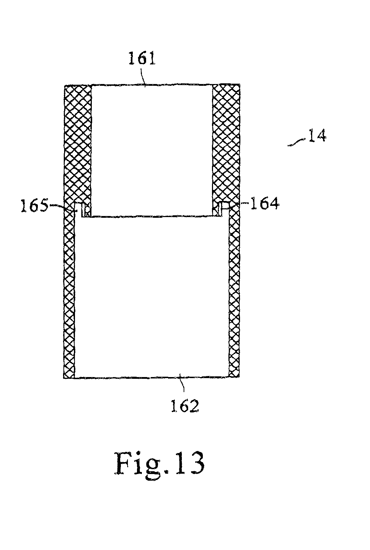

Fig. 13 shows another embodiment of the invention, displaying a sectional view of the fixating mechanism coordinating with the extension rod from the X-X line in Fig. 6, wherein the second piercing hole 162 extends upwards to be installed with a concave ring 165 and a plurality of protruding ribs 164 are formed on one side of the concave ring 165; please also refer to Fig. 6, when the second rod 232 is insertingly placed in the second piercing hole 162 toward the direction of the concave ring 165, the second rod 232 is not to be easily turned loose by the pressing of the protruding ribs 164.

The fixating mechanism 14 of the invention can not only be implemented in a set of extending rods (namely, the first rod 231 and the second rod 232), but it can also be implemented in the supporting frame 25. Furthermore, for the supporting frame 20 for work light to be applied on flat ground or adaptable to uneven surface, one of the feet in the supporting leg 25 can be designed to contain at least two extension rods (similar to the first rod 231 and the second rod 232, but only with shorter lengths), whereon the fixating mechanism 14 of the invention is installed, so that by adjusting the extension rods from a foot in the supporting leg 25, such foot with the fixating mechanism can compensate for the unevenness of any surface and sustain the standing stability of the supporting frame for work light.

## Claims

1. A supporting frame for work light, whereon work lights are installed, comprising extension rods, with the state of extension being controlled by the fixating mechanism; and supporting legs, pivotally jointed to said extension rods, so as to keep said supporting frame for work light on the ground, wherein said fixating mechanism includes a movable rod, installed at the junction of said extension rods, so as to be operated with signal action to control the state of tightness or looseness of said fixating mechanism, and further enabling said fixating mechanism to tighten or loosen the state of extension of said extension rods.

2. A supporting frame for work light as in claim 1, wherein said extension rods are composed of a first rod and a second rod, and at the junction of said first rod and said second rod is installed with said fixating mechanism to control the state of extension of two said rods.

3. A supporting frame for work light as in claim 2, wherein said fixating mechanism is of a ring-shaped structure with notches, with the notched portion being pierced by a rod body, and one end of said rod body is to be secured and the other end pivotally jointed to said movable rod, thus said movable rod can constrict said notch via said rod body, and further securing the state of extension of said extension rods.

4. A supporting frame for work light as in claim 3, wherein said rod body is of a screw, with one end of said screw rod locked on said ring-shaped structure by a screw nut, and said screw nut can be used for adjusting the degree of constriction of said notch by said movable rod.

5. A supporting frame for work light as in claim 1, wherein said extension rods are composed of a first rod, a second rod and a third rod, and said fixating mechanisms are installed at the junctions of both said first rod and second rod, and said second rod and said third rod.

6. A supporting frame for work light as in claim 1, wherein said supporting legs include an extension leg that can be controlled by said fixating mechanism regarding the state of extension.

7. A supporting frame for work light as in claim 1, wherein a crossbar is further included, with work lights installed thereon, and said crossbar can be jointed to extension rods.

8. A supporting frame for work light, with at least one work light installed thereon, comprising:
extension rods, with the state of extension being controlled by the fixating mechanism; and
supporting legs, pivotally jointed to said extension rods, so as to keep said supporting frame for work light on the ground, **characterized in that**:
said extension rods include a first rod and a second rod; said first rod can be sheathed into said second rod, and said fixating mechanism is installed at the junction of said first rod and said second rod; said fixating mechanism includes a ring-shaped structure having notches, with said notch being pierced through by a rod body, and the movable rod, pivotally jointed to one side of said rod body, is used for activating the constriction of said notch, so as to control the state of tightness or looseness of said fixating mechanism, and further secure or release the state of extension between said first rod and said second rod.

9. A supporting frame for work light used for installing work light, comprising a set of extension rods, a fixating mechanism and a supporting frame; said supporting frame is pivotally jointed to said extension rods; the state of extension of said extension rods is to be fixated by said fixating mechanism; said fixating mechanism, installed at the junction of said extension rods, includes a main body having notched groove and a movable rod; said movable rod, operated with single action, controls the state of extension by the cam structure installed therein ,thus further enabling said fixating mechanism to secure or release the extension state of said extension rod.

10. A supporting frame for work light as in claim 9, wherein said extension rods includes at least a first rod and a second rod, and the junction of both said first and second rod is installed with said fixating mechanism so that the state of extension for two said rods is to be controlled.

11. A supporting frame for work light as in claim 9, wherein said main body includes round holes having same axis but different diameters, said round holes include a first and second piercing holes, with each said piercing hole extending to form two protruding portions respectively.

12. A supporting frame for work light as in claim 9, wherein said first piercing hole is used for being pierced through by another extension rod.

13. A supporting frame for work light as in claim 1, wherein said second piercing hole is used for being pierced through by another extension rod.

14. A supporting frame for work light as in claim 9, wherein said notched groove of said main body is formed by said protruding portion of said first piercing hole and said protruding portion of said second piercing hole.

15. A supporting frame for work light as in claim 11, wherein said second piercing hole extends upwards to be installed with a concave ring, and on one side of said concave ring a plurality of protruding ribs is formed.

16. A supporting frame for work light as in claim 9, wherein at least one foot in said supporting frame is installed with a set of extension rods, and the state of extension of said set of extension rods is to be adjusted by a fixating mechanism.
